## Europäisches Patentamt

## European Patent Office

## Office européen des brevets

(11) Numéro de publication: **0 201 022**
**A2**

# DEMANDE DE BREVET EUROPEEN

(21) Numéro de dépôt: **86105847.7**

(22) Date de dépôt: **28.04.86**

(51) Int. Cl.⁴: **H 02 K 21/14**

(30) Priorité: **10.05.85 CH 1998/85**

(43) Date de publication de la demande: **12.11.86**
**Bulletin 86/46**

(84) Etats contractants désignés: **DE FR GB NL**

(71) Demandeur: **PORTESCAP, 165 Rue Numa-Droz, CH-2300 La Chaux-de-Fonds (CH)**

(72) Inventeur: **Oudet, Claude, 12, rue Capitaine-Arrachart, F-25000 Besançon (FR)**

(74) Mandataire: **Hranitzky, Wilhelm Max et al, c/o WILLIAM BLANC & CIE Conseils en Propriété Industrielle SA 5, Place du Molard, CH-1204 Genève (CH)**

(54) **Moteur électrique synchrone à rotor en forme de disque.**

(57) Le moteur comporte une partie de rotor en forme de disque annulaire aimanté (5) et un ensemble de circuits magnétiques élémentaires (9, 10), chaque circuit ayant une forme en C essentiellement plate et étant disposé radialement, une bobine de commande (11) étant placée dans une ouverture centrale du circuit. Les sections transversales du circuit le long du chemin du flux magnétique ont une aire pratiquement constante. La disposition décrite permet de réaliser un moteur dont le poids et les pertes dans le fer sont réduits au minimum pour un couple donné.

1

# MOTEUR ELECTRIQUE SYNCHRONE A ROTOR EN FORME DE DISQUE

La présente invention concerne un moteur électrique synchrone selon le préambule de la revendication 1.

Un tel moteur est décrit, par exemple, dans le brevet suisse No. 637 508. La conception originale de ce moteur est très bien adaptée à des moteurs de taille relativement petite, correspondant à des puissances sensiblement inférieures à 1 kilowatt. Pour des tailles plus grandes, il s'avère, en particulier, que la structure décrite n'offre pas une relation optimale entre le couple produit et le poids du moteur, notamment dans la mesure où ce poids dépend de la masse de fer des circuits magnétiques élémentaires.

L'invention vise à fournir un moteur du type mentionné au début, dans lequel la masse de fer des circuits magnétiques élémentaires, et, par conséquent, le poids du moteur et les pertes dans le fer, sont réduits au minimum pour un couple donné du moteur.

A cet effet, le moteur selon l'invention comporte la disposition décrite dans la partie caractéristique de la revendication 1.

Une forme d'exécution particulière de ce moteur est décrite dans la revendication 2.

D'autres caractéristiques et avantages de l'invention ressortiront de la description d'une forme d'exécution préférentielle donnée ci-après, avec référence au dessin annexé, dans lequel :

La figure 1 est une vue en coupe axiale d'un moteur selon l'invention, à deux étages,

la figure 2 est une vue agrandie d'un circuit magnétique élémentaire du moteur de la figure 1, séparé de celui-ci et vu, dans la position de la figure 1, de l'axe du moteur, et

la figure 3 est une vue en coupe partielle du moteur selon la ligne III-III de la figure 1.

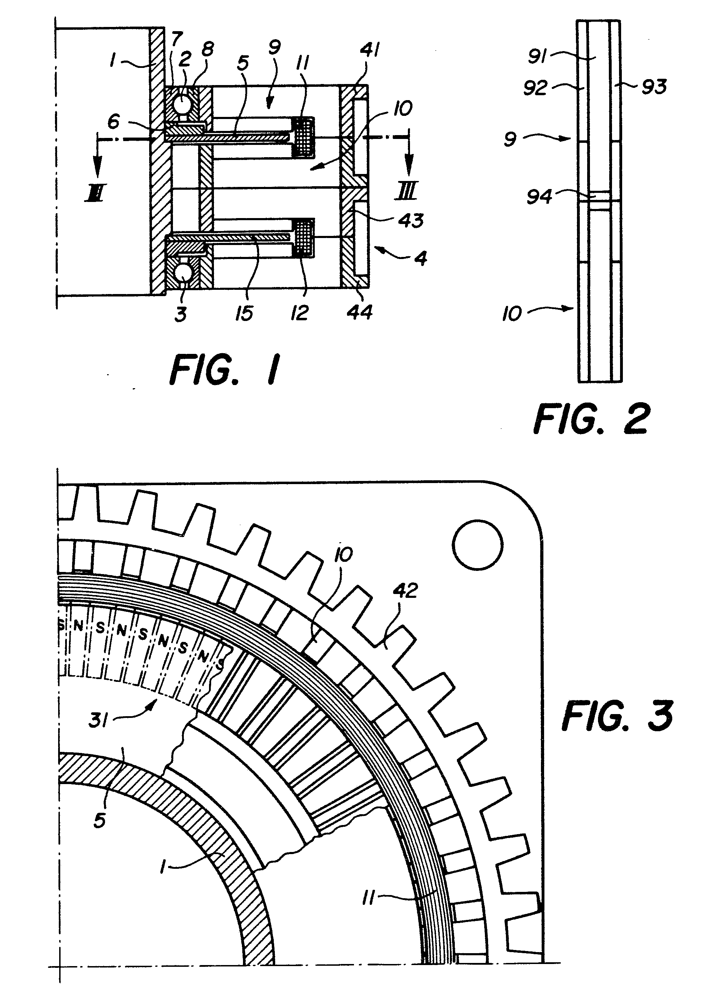

Le moteur représenté aux figures 1 à 3 comporte un arbre 1, en l'occurrence un arbre creux, d'un diamètre relativement important par rapport aux dimensions radiales du moteur. L'arbre 1 est monté de façon rotative, au moyen de roulements à billes 2, 3, dans un ensemble de stator 4, formé de deux sous-ensembles comportant respectivement des pièces 41, 42 et 43, 44 réalisées, par exemple, en aluminium ou en une matière plastique.

Un premier disque annulaire 5, en un matériau aimantable tel que le samarium-cobalt, est monté, par l'intermédiaire d'une pièce de support annulaire 6, sur la bague intérieure 7 du roulement à billes 2, cette bague étant solidaire de l'arbre 1. La bague extérieure du roulement 2 est montée sur la pièce 41 du stator. Cette pièce 41 comporte des encoches dans le sens radial du moteur, dans lesquelles sont disposées des pièces 9, plates, réalisées en un matériau de très bonne perméabilité magnétique, et formant les premières parties des circuits magnétiques élémentaires du sous-ensemble 41, 42. Une deuxième série de telles pièces, désignées par 10, est placée dans des encoches correspondantes de la pièce 42, et forme les deuxièmes parties de ces circuits magnétiques élémentaires.

Comme le montre la figure 1, deux pièces correspondantes 9 et 10 sont disposées de manière à former un circuit en forme de C, présentant un entrefer dans lequel passe la partie extérieure du disque annulaire 5. Une bobine électrique annulaire 11 est placée dans les ouvertures centrales des circuits magnétiques élémentaires du sous-ensemble 41, 42.

Le disque annulaire 5 est aimanté en direction axiale, de façon à faire apparaître sur chacune de ses faces des pôles magnétiques de polarités alternantes, soit N et S, ces pôles étant répartis sensiblement régulièrement le long d'une zone annulaire 31 indiquée sur la figure 3. Sur cette figure, les pôles N et S ont été montrés par des traits mixtes. Les dimensions de ces pôles sont sensiblement égales à celles des surfaces polaires formées par les extrémités des branches de "C" des pièces 9 et 10, et l'espacement angulaire des lignes médianes des pôles est sensiblement de $\pi/N$ pour un nombre de pôles de 2N apparaissant dans chacune des zones annulaires sur les deux faces du disque. L'espacement angulaire moyen des plans médians axiaux des circuits magnétiques élémentaires 9, 10 est de $2\pi/N$. L'espacement effectif entre deux circuits voisins peut être légèrement différent de cette valeur moyenne, afin de compenser l'influence de certaines harmoniques du couple du moteur.

Le moteur décrit aux figures 1 à 3 est un moteur à deux étages, le premier comportant le disque aimanté 5, et le deuxième, tout à fait similaire, un disque aimanté 15, ce dernier coopérant avec le sous-ensemble de stator comportant les pièces 43 et 44 mentionnées plus haut. La structure du deuxième étage est analogue à celle qui vient d'être décrite en rapport avec le premier. Chaque étage constitue, par exemple, une phase d'un moteur diphasé.

La figure 2 montre un circuit magnétique élémentaire vu de l'axe du moteur dans la position de la figure 1. De forme générale plate, ce circuit présente, le long du chemin du flux magnétique engendré par la bobine de commande, c'est-à-dire le long du "C", des épaisseurs différentes, de telle façon que l'aire des sections transversales perpendiculaires au chemin du flux, soit pratiquement constante. Dans la

4

forme de réalisation illustrée dans les figures, une partie de circuit telle que 9 est constituée de trois pièces en tôle 91, 92 et 93 superposées, la partie centrale 91 comportant une des deux parties polaires formant l'entrefer, désigné par 94, et les parties latérales 92 et 93 constituant un renforcement de l'épaisseur de cette partie de circuit dans la portion située à la hauteur de l'ouverture centrale, et dans la portion opposée à l'entrefer par rapport à cette ouverture centrale. La partie polaire qui présente de préférence, comme le montre la figure 1, une longueur relativement importante dans le sens radial du moteur, présente ainsi une épaisseur plus faible que les parties renforcées fermant le circuit magnétique, mais l'aire des sections transversales correspondantes, rectangulaires, est sensiblement la même dans les portions situées respectivement à la hauteur de la bobine, mesurée à partir de l'arbre du moteur, et du côté opposé à l'entrefer.

Cette disposition permet de dimensionner le circuit magnétique élémentaire de façon à obtenir, d'une part, des surfaces polaires qui soient le plus long possible dans le sens radial du moteur, et, d'autre part, un circuit dont la longueur du chemin du flux magnétique soit la plus courte possible pour une section transversale donnée de la bobine de commande, et dont la masse totale soit sensiblement réduite. La section du circuit magnétique est, bien entendu, choisie en rapport avec le champ magnétique devant être engendré par la bobine 11, de façon à éviter une saturation du fer. Le circuit magnétique décrit permet alors d'obtenir un couple maximal pour un minimum de pertes dans le fer et un poids minimal du moteur.

## REVENDICATIONS

1. Moteur électrique synchrone comportant au moins une partie de rotor essentiellement en forme de disque annulaire, aimanté axialement de façon à présenter sur ses faces planes opposées une série de pôles magnétiques de polarités alternantes, disposés régulièrement le long d'une zone annulaire de chaque face, la partie de rotor étant montée de façon à être solidaire d'un arbre rotatif, moteur comportant en outre un ensemble de plusieurs circuits magnétiques élémentaires, isolés magnétiquement les uns des autres, une bobine électrique de commande, annulaire, couplée avec ledit ensemble de circuits magnétiques élémentaires, chacun de ces circuits présentant un entrefer et l'ensemble de ces entrefers formant une région annulaire dans laquelle sont disposées les zones aimantées de la partie de rotor, chacun des circuits magnétiques élémentaires ayant une forme en C essentiellement plate, étant disposé essentiellement radialement par rapport à l'arbre du moteur et présentant une ouverture centrale dans laquelle est placée la bobine de commande annulaire, caractérisé en ce que les sections transversales de chaque circuit magnétique élémentaire (9, 10), considérées le long du chemin du flux magnétique engendré par la bobine de commande (11), ont une aire pratiquement constante, au moins dans les portions du circuit situées à proximité de l'entrefer, dans les portions situées à la hauteur de l'ouverture centrale, mesurée à partir de l'arbre du moteur (1), et dans la portion opposée à l'entrefer par rapport à l'ouverture centrale.

2. Moteur électrique synchrone selon la revendication 1, caractérisé en ce que lesdites portions des circuits magnétiques élémentaires situées à la hauteur de l'ouverture centrale et celles opposées à l'entrefer ont une épaisseur plus grande, mesurée dans la direction circonférentielle du moteur, que les portions situées à proximité de l'entrefer.

0201022

**FIG. 1**

**FIG. 2**

**FIG. 3**